Europäisches Patentamt

(19) European Patent Office

Office européen des brevets

(11) Publication number: **0 058 705
B1**

(12) # EUROPEAN PATENT SPECIFICATION

(45) Date of publication of patent specification: **02.01.86**

(51) Int. Cl.⁴: **B 61 K 9/00**

(21) Application number: **81902434.0**

(22) Date of filing: **28.08.81**

(86) International application number:
**PCT/SE81/00241**

(87) International publication number:
**WO 82/00805 18.03.82 Gazette 82/08**

(54) **ELECTRONIC CONTROL SYSTEM FOR WHEEL AXLES OF RAIL-MOUNTED VEHICLES, ESPECIALLY RAILROAD CARS.**

(30) Priority: **29.08.80 SE 8006052**

(43) Date of publication of application:
**01.09.82 Bulletin 82/35**

(45) Publication of the grant of the patent:
**02.01.86 Bulletin 86/01**

(84) Designated Contracting States:
**DE FR GB**

(56) References cited:
**CH-A- 478 686
DE-A-2 105 869
SE-B- 381 625**

(73) Proprietor: **Sinha, Brajnandan
17 Tunnlandsvägen
S-175 46 Järfälla (SE)**

(72) Inventor: **Sinha, Brajnandan
17 Tunnlandsvägen
S-175 46 Järfälla (SE)**

(74) Representative: **Onn, Thorsten
AB Stockholms Patentbyra Zacco & Bruhn P.O.
Box 3129
S-103 62 Stockholm (SE)**

Courier Press, Leamington Spa, England.

# Description

This invention relates to an electronic control system for wheel axles of rail-mounted vehicles, especially railroad cars, comprising a transducer mounted on or adjacent to each bearing box for emitting, during the travel of the vehicle, an electric signal corresponding to the behaviour of the axle to an electronic signal processing unit common to all transducers on the same vehicle, each transducer being adapted to transmit continuously to the processing unit a signal corresponding to the vibrations of the wheel axle, said signal being a measure of the natural frequency of the wheel transmitted to the axle and to the bearing box, and an indicating unit delivering information of the type of fault as well as the axle where the fault has developed.

Neglected maintenance, as sporadic spot checks of the condition of the wheel axles, can have disastrous consequences for passengers as well as for rolling stock, caused by the tipping, derailing etc. of cars.

The present invention has the object of preventing such incidents.

From DE—A—2 105 869 a system of the general kind stated above is known. It is, however, restricted to detecting irregularities on the wheel periphery such as flatted portions. These give rise to bumps for each revolution of a wheel, and the measurements are based on the vertical acceleration due to such bumps. Precautions are taken for eliminating the natural vibration frequency of the wheel so as not to interfere with the measurement proper.

On the contrary, the invention is based on a continuously supervision of said natural frequency of the wheel, and the deviations from the nominal frequency are analysed in order to determine the art of any abnormal state of the wheel.

Thus, according to the invention the processing unit processes the electronic signal such that it detects natural frequencies distinctly deviating from the nominal natural frequency band corresponding to faultless conditions, said deviating frequencies, which are different for faults in a wheel or in a bearing box, being subsequently transmitted to the indicating unit in the form of respective fault signals, together with a signal indicating the locality of the origin of the particular frequency.

The measuring values used in the control system are the vibrations occurring in the bearing boxes and arising from the contact of the wheel with the rail, from the play between wheel rim and hub disc, from defects in the bearings and/or from non-circular rim.

One embodiment of the invention is described in the following, with reference to the accompanying drawings, in which

Fig. 1 is a schematic view of an axle arrangement at a driving vehicle (locomotive) equipped with the system according to the invention,

Figs. 2 and 3 are flow diagrams for the signal processing unit and, respectively, indicating unit comprised in the equipment, and

Figs. 4 and 5 are examples of block diagrams for fault determination and, respectively, fault indication without and, respectively, with microcomputer.

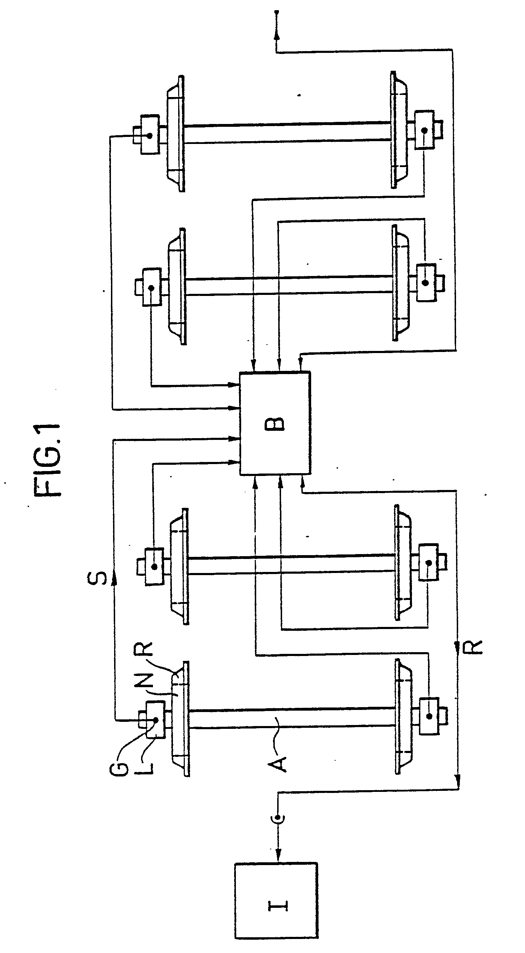

In Fig. 1 four equal wheel pairs are shown, each comprising an axle A, which at each end carries a hub disc N and a rim R attached thereabout for rolling on the rail. The bearing box for each axle end is designated by L. At the embodiment shown, a transducer G in the form of an accelerometer (indicated merely as a dot), preferably of piezoelectric type, is rigidly attached directly on each bearing box.

The vibrations occurring on the wheel axle and thereby on the bearing box of the vehicle, when running, are converted by the transducer G into an electric signal S with a frequency corresponding to the vibrations.

The eight signals S (one for each wheel) are passed to an electronic processing unit B common to all transducers on the vehicle, in which unit the signals are classified individually with respect to frequency. When in any of the frequencies a change beyond the established normal values arises and endures, the unit B determines the fault class by means of an empirically established program. Information thereon and on the location (wheel in question) of the fault is passed in the form of a report signal R to an indicating unit I, which informs the driver on the situation.

When the driving vehicle propels one or several cars coupled thereto, as indicated to the right in Fig. 1, the driver also needs information on the car on which the fault is located. The coupled cars are equipped in the same way as the driving vehicle, except for the indicating unit, and all signal processing units in the car set are connected in series. Upon initiation by the indicating unit, an addressing signal is emitted through the entire car set, and in each processing unit the address is dated-up by one step. The ingoing address is stored in each signal processing unit and used as address for faulty axle.

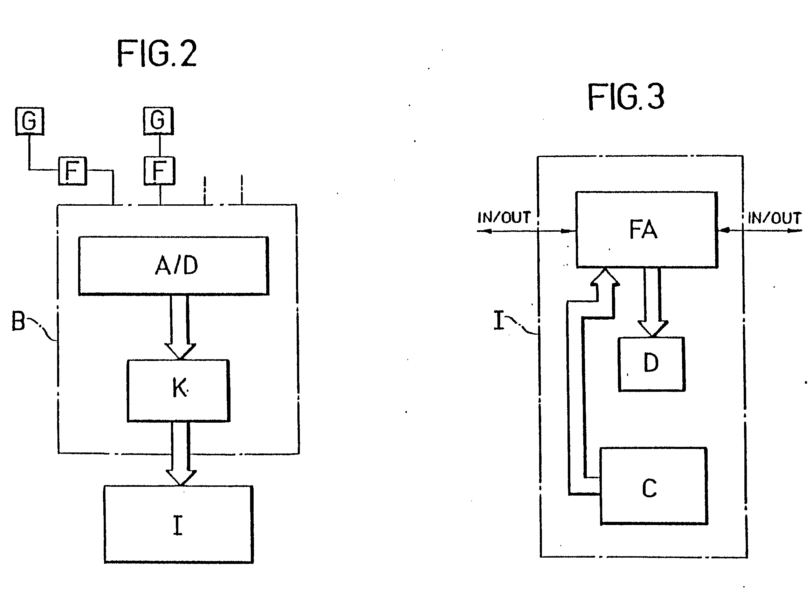

Fig. 2 is a schematic block and flow diagram for the signal processing unit B, which are the embodiment shown is of digital type. From the transducers G (only two are shown) the analogue signals S pass via amplifiers F to an analogue-digital converter A/D. The digital signals from A/D are fed to a calculating unit K, and the resulting information therefrom is sent, as described above, to the indicating unit I, which also acts as address decoding unit and initiating unit for the infeed and outfeed of series data.

According to the diagram in Fig. 3, an output signal passes from a fault indicating and address unit to a display unit D for information of the driver, and a control unit C controls the function of the indicating unit.

The invention, according to the aforesaid, is based on the observation that vibrations of bearing boxes change their nature when faults arise, i.e. the natural wheel frequency transferred to the bearing box is at faults in wheels or bearings shifted away from its nominal value corresponding to faultless condition. It was, thus, observed that wheel rim faults (play) cause a distinctive increase in frequency, and a bearing fault tending to lock the wheel yields a more distinctive increase.

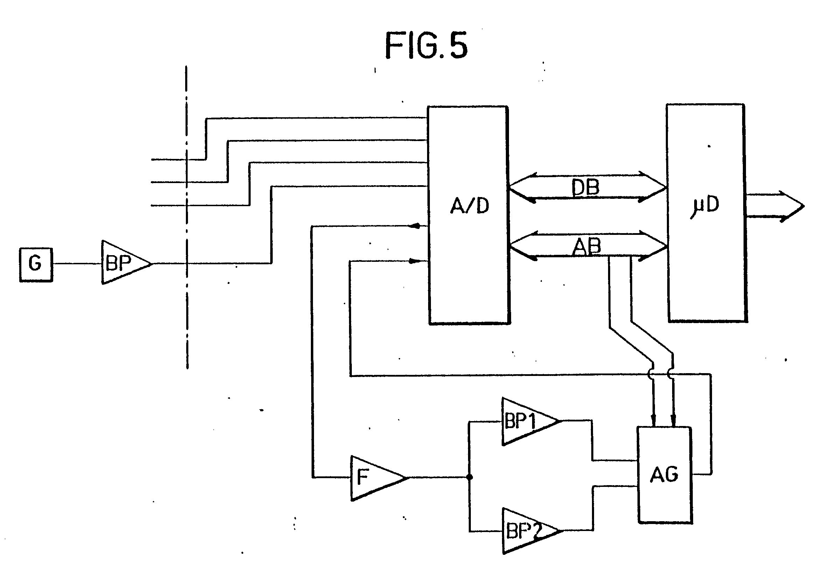

Figs. 2 and 5 show examples of block diagrams for the detection of wheel rim play and wheel locking.

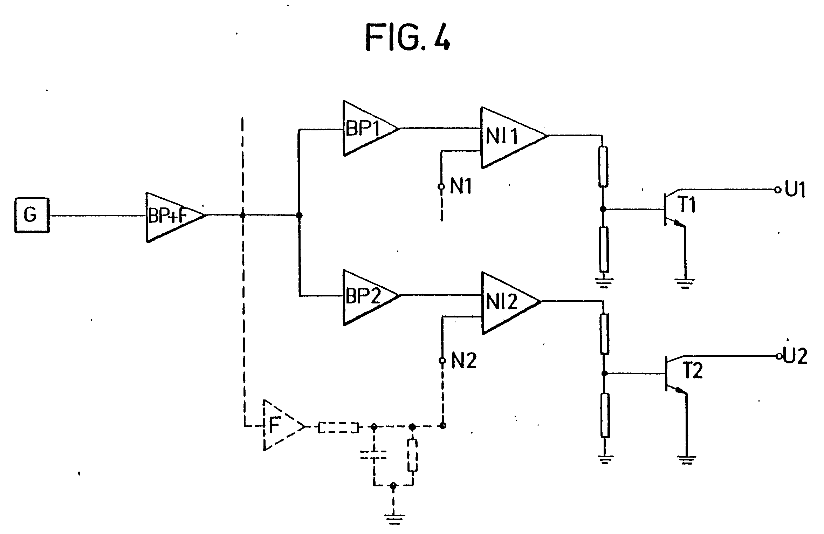

In Fig. 4 showing the arrangement for each wheel of the car, the output signal of the transducer G attached to the bearing box of the wheel passes via a combined band pass filter-amplifier BP + F, which filters off undue harmonics, to the parallel connected band pass filters BP1 and BP2, which are tuned for wheel rim faults and, respectively, wheel locking. From there, the signals having different frequencies pass to the respective level indicators NI1 and NI2, which are intended to permit passage of the signal first when it exceeds a certain amplitude or level N1 and, respectively, N2. A possibility for N2 of tapping reference level via an amplifier F connected to the output of the filter-amplifier BP + F and a filter circuit is indicated by dashed lines. The same applies in analogue manner to level N1. A signal permitted to pass then passes in each of said cases via a voltage divider to the base of a transistor T1 and, respectively, T2, the outpur signal of which at the terminal U1 and, respectively, U2 indicating rim fault and, respectively, locking is fed to a central computer or local computer for processing and indication.

In Fig. 5, which refers to an arrangement common to all wheels of a car and utilizing a micro-computer, the output signal from each transducer G (only one shown) passes via a band pass filter BP to an analogue-digital converter A/D, which via a data bus DB and an address bus AB communicates with a micro-computer μD. The analogue signal from the converter A/D passes via an amplifier F with automatic amplification control to the two band pass filters BP1 and BP2, which as in the foregoing case are tuned for wheel rim faults, and, respectively, wheel locking. The output signals of the filters are fed to an analogue gate AG. The output signal therefrom passes to control from the address bus AB to the converter A/D, which transduces the information to the micro-computer μD via the data bus DB. On the basis of this information the computer sends output signals to existing indicators for wheel faults and, respectively, bearing faults.

The invention is not restricted to the embodiment described above, but various modifications can be imagined within the scope of the invention. Accelerometers, for example, of a type other than piezoelectric can be used. Alternatively, the use of acousto-electric converters (microphones) for the electric representation of the vibrations can be imagined, which always are accompanied by sound phenomena.

## Claims

1. An electronic control system for wheel axles of rail-mounted vehicles, especially railroad cars, comprising a transducer (G) mounted on or adjacent to each bearing box (L) for emitting, during the travel of the vehicle, an electric signal (S) corresponding to the behaviour of the axle (A) to an electronic signal processing unit (B) common to all transducers on the same vehicle, each transducer (G) being adapted to transmit continuously to the processing unit (B) a signal corresponding to the vibration of the wheel axle, said signal being a measure of the natural frequency of the wheel (N,R) transmitted to the axle (A) and to the bearing box (L), and an indicating unit delivering information of the type of fault as well as the axle (A) where the fault has developed, characterized in that the processing unit (B) processes the electronic signal such that it detects natural frequencies distinctly deviating from the nominal natural frequency band corresponding to faultless conditions, said deviating frequencies, which are different for faults in a wheel or in a bearing box, being subsequently transmitted to the indicating unit (I) in the form of respective fault signals, together with a signal indicating the locality of the origin of the particular frequency.

2. A control system as defined in claim 1, wherein the transducers (G) are accelerometers, preferably of piezoelectric type.

3. A control system as defined in claim 1, wherein the transducers (G) are acousto-electric converters.

4. A control system as defined in any one of the preceding claims, wherein the signal processing unit (B) is of digital type.

## Revendications

1. Système électronique de surveillance d'essieux dans des véhicules sur rails, en particulier des wagons de chemin de fer, comprenant un capteur (G) monté sur chaque boîte d'essieu (L) ou au voisinage de celle-ci, émettant au cours du déplacement du véhicule un signal électrique (S) correspondant au comportement de l'essieu (A), ce signal étant transmis à un ensemble électronique de traitement (B) de tous les capteurs du même véhicule, caractérisé en ce que le capteur est monté pour émission continue d'un signal correspondant aux vibrations de l'essieu, ce signal constituant une mesure relative à la fréquence propre de la roue, cette fréquence étant transmise à l'essieu (A) et à la boîte d'essieu, en ce que l'ensemble de traitement (B) est disposé pour la détection de fréquences propres nettement différentes à la fréquence propre nominelle désignant les conditions correctes, les fréquences divergentes étant différentes si la faute émane de la roue ou de l'essieu et étant transmises, sous forme de signaux respectifs de faute, à un indicateur (I) accompagnés d'un signal indiquant la source de la fréquence en question.

2. Système de surveillance selon la revendication 1, caractérisé en ce que les capteurs (G) sont des accéléromètres, notamment d'un type piezo-électrique.

3. Système de surveillance selon la revendication 1, caractérisé en ce que les capteurs (G) sont des convertisseurs acousto-électriques.

4. Système de surveillance selon l'une des revendications précédentes, caractérisé en ce que l'ensemble de traitement des signaux (B) est d'un type numérique.

## Patentansprüche

1. Elektronisches Kontrollsystem für Radachsen von Fahrzeugen auf Schienen, insbesondere Eisenbahnwagen, das a) einen an jedem Lagerkörper (L) oder nahe daran montierten Geber (G) zur Aussendung während der Bewegung des Fahrzeugs eines elektrischen, dem Auftreten der Achse (A) entsprechenden Signals in eine elektronische, für alle Geber desselben Fahrzeuges gemeinsame Signalverarbeitungseinheit umfasst, wobei jeder Geber (G) angeordnet ist, ein Signal in die Verarbeitungseinheit (B) kontinuierlich zu überführen, das der Vibration der Radachse entspricht und ein Mass der natürlichen, in die Achse (A) und den Lagerkörper (L) überführten Radfrequenz (N,R) ist, ferner b) eine Anziegeeinheit umfasst, die Information vom Fehlertyp sowie von der Achse (A), wo der Fehler entstanden ist, abliefert, dadurch gekennzeichnet, dass die Verarbeitungseinheit (B) das elektronische Signal derart behandelt, dass sie die natürlichen Frequenz entdeckt, die von dem nominellen, fehlerfreien Verhältnissen entsprechenden natürlichen Frequenzband distinkt abweicht, wobei die abweichenden Frequenzen, die für Fehler in einem Rad oder in einem Lagerkörper verschieden sind, danach in die Anzeigeeinheit (I) zusammen mit einem Signal überführt werden, das die Ursprungsstelle der speziellen Frequenz zeigt.

2. Kontrollsystem nach Anspruch 1, worin die Geber (G) Beschleunigungsmesser, vorzugsweise vom druckelektrischen Typ, sind.

3. Kontrollsystem nach Anspruch 1, worin die Geber (G) akustische-elektrische Wandler sind.

4. Kontrollsystem nach einem der vorhergehenden Ansprüche, worin die Signalverarbeitungseinheit (B) von Digitaltyp ist.

# FIG.1

FIG.3

FA

D

C

IN/OUT

IN/OUT

I

FIG.2

A/D

K

I

G

F

F

G

B

# FIG. 4

0 058 705

FIG.5